# EUROPEAN PATENT SPECIFICATION

(11) **EP 0 805 842 B1**
(45) Date of publication and mention of the grant of the patent: **15.08.2007**
(21) Application number: 96902664.0
(22) Date of filing: 16.01.1996
(51) Int. Cl.: C09J 123/20, C09J 157/02

(54) **HOT MELT ADHESIVE HAVING IMPROVED WET STRENGTH PROPERTIES**
HEISSCHMELZKLEBER MIT VERBESSERTER FEUCHTIGKEITSBESTÄNDIGKEIT
ADHESIF THERMOFUSIBLE PRESENTANT UNE RESISTANCE AMELIOREE A L'HUMIDITE

(30) Priority: 25.01.1995 US 377632
(43) Date of publication of application: 12.11.1997
(73) Proprietor: FINDLEY ADHESIVES INC., Wauwatosa Wisconsin 53226-3413 (US)
(72) Inventor: STRELOW, Diane, Wukesha, WI 53186 (US); ALPER, Mark, Mukwonago, WI 53149 (US)
(74) Representative: Popp, Eugen
(86) International application number: PCT/US1996/000438
(87) International publication number: WO 1996/023042

(56) References cited:
- WO-A-92/12212
- US-A- 4 072 735
- US-A- 4 138 378
- US-A- 4 618 438
- US-A- 4 657 958
- US-A- 4 833 192
- US-A- 5 106 447
- US-A- 5 525 358

## Description

### Background of the Invention

The present invention relates to hot melt adhesives which exhibit improved open-times, and more specifically to hot melt adhesives having improved wet strength properties and which find usefulness in the manufacture of disposable nonwoven garments.

### Description of the Prior Art

The prior art is replete with numerous examples of hot melt adhesives which are employed for the construction of disposable soft goods. Specific applications for these prior art adhesives have included disposable diapers, sanitary napkins, surgical drapes, hospital pads and adult incontinence products to name but a few. Moreover the prior art methods of application of these prior art adhesives have included but are not limited to extrusion (multi-bead or slot) and spray or wheel application systems.

Those skilled in the art will readily recognize that many different polymers have been used in adhesives employed in the construction of disposable soft goods. In this regard typical hot melt adhesives have employed polymers which have included S-I-S (styrene-isoprene-styrene); SBS (styrene-butadiene-styrene); SEBS (styrene-ethylene-butylene-styrene); EVA (ethylene vinyl acetate); and APAO (amorphous poly alpha olefin). While these polymers, when properly blended provide acceptable adhesion to most substrates employed in typical diaper construction, and further provide acceptable adhesion under dry conditions, they have had several shortcomings which have detracted from their usefulness.

One of the most noteworthy shortcomings of the prior art adhesives concerns the manner in which the adhesive-reacts when -exposed to liquids, such as water or urine. For example, when the prior art adhesives are applied to polyolefin substrates (such as polyethylene, polypropylene or nonwoven substrates, as the case may be), almost all adhesives will give good dry bonds and will normally maintain an acceptable bond strength when wet. However, when substrates such as tissue or core fluff are used, certain problems present themselves. For example, while many of the adhesives formulated with the polymers, noted above, will give excellent dry bond strengths, these same adhesive bonds appear to be easily broken when the substrates are exposed to water, urine, or other water based discharges or solutions. This bond delamination of the various substrates can cause the fluff core to sag, and further results in a poor fit, absorption problems and leaking of the garment especially when the garment is of the type which includes disposable diapers, or incontinence products.

Document US 4,833,192 discusses the use of a copolymer of butene-1-ethylene in a blend for a hot melt adhesive. This melt further contains a hydrocarbon tackifier and a polybutene copolymer of molecular weight not less than 2000 for use as a plasticizer. No report is made within this document for the adhesive exhibiting improved wet strength bond characteristics.

Document US 5, 106,447 discloses a hot melt adhesive incorporating a copolymer of butene-1-ethylene with a tackifier and a polybutene copolymer as a plasticizer. The blend is stated as containing up to about 5% by weight of the polybutene copolymer plasticizer, in contrast to the present invention which requires between 5% to 30% of the polybutene copolymer. This document makes no statement as to improving the wet strength bond characteristics.

More recently, manufacturers of disposable nonwoven garments such as diapers have endeavored to produce products which are much thinner in their overall thickness and profile and which incorporate super absorbent materials in place of the fluff, which is normally in the core. In this regard, it should be understood that the nonwoven fibers comprise long wood pulp fibers which are interwoven together to form a given mass. In contrast, super absorbent material includes small sphere shaped particles which are not connected together to form a coherent mass like the nonwoven material. Therefore, core integrity becomes an even more important issue with these thinner garments. Therefore, it has long been known that it would be desirable to have a hot melt adhesive which is useful for bonding to substrates which are typically employed in the construction of nonwoven garments, such as polyethylene; polypropylene; nonwoven; tissue; or fluff and which further maintains acceptable bond strength with the above identified substrates following exposure of same for prolonged periods of time to water, urine or similar materials, and which further is substantially nonblocking under normal storage, and usage conditions.

### Summary of the Invention

It is therefore an object of the present invention to provide an improved hot melt adhesive which is useful for the manufacture of disposable soft goods.

The present invention according to claims 1 and 2, provides a hot melt adhesive which has improved wet strength characteristics and comprises a formulation having the following ingredients:
10% to 60% by weight of butene-1-ethylene copolymer;
20% to 80% by weight of a tackifying resin;
5% to 30% by weight of a plasticizer with the trade designation Indopol H-100, which is a polybutene copolymer of isobutylene and butene having a number average molecular weight of about 920 as determined by vapour phase osmometer and a viscosity of 1.96x10⁻⁴ to 2.33x10⁻⁴m²/s (196-233 cSt) at 99°C (210°F), and
0.1% to 3% by weight of an antioxidant,
where the ingredients total 100% by weight, and this is based on the weight of the entire adhesive composition. Such a hot melt adhesive has a viscosity of 1 to 50kg/ms at 162.78°C (325 *°*F) and a melting point of 76.67 °C to 93.33°C (170°F to 200°F).

Additionally, the tackifying resin is at least partially compatible with the butene-1-ethylene copolymer and the antioxidant is a hindered phenolic antioxidant.

### Description of the preferred Embodiment

Butene-1-homopolymers and copolymers which are useful in the present invention are primarily linear chain molecules with regular and spatially ordered arrangements of ethyl side groups. These side groups are the result when butene-1 is polymerized across the 1, 2, carbon double bond, and along an ethylene chain backbone. This is described in further detail in U.S. Patent Number 3,362,940. When cooled from a melt, the ethyl side groups initially align in a tetragonal spatial arrangement. With time the tetragonal crystalline phase form transfers into a stable hexagonal spatial arrangement with a subsequent development of improved physical properties. A more thorough discussion of the polymer utilized herein may be found in the reference to Mostert, U.S. Patent Number 4,937,138. As will be seen from the disclosure above, the present polymer is useful in amounts of 10% to 60%, by weight.

A suitable commercially available butene-1-ethylene copolymer can be secured from Shell Chemical Company of Houston, Texas under the tradename Duraflex 8910 PC.

As noted above, tackifying resins which are useful within the scope of the present invention have a weight of 20% to 80%, by weight. The tackifying resins can be selected from any of the nonpolar types, which are commercially available. An example of a commercially available tackifying resin which is useful for the present invention includes the resin which is identified commercially by the trade designation Escorez 1310 LC and which is manufactured by Exxon Chemical Company. Normally, nonpolar tackifying resins which are useful with the present invention include resins which have partially, or completely hydrogenated C₉ or C₅ based hydrocarbon resins with softening points that are in a range of approximately 70°C to approximately 125°C. Tackifying resins which are useful for the present invention can perhaps include polar tackifying resins, however, the choice of available polar tackifying resins is limited in view of the fact that many of the polar resins appear only partially compatible with the butene-1-homopolymer, and copolymers. As noted above, the tackifying resin selected which is useful with the present invention will be 20% to 80%, by weight, of the entire adhesive composition and more preferably about 50% thereof.

The inventors have discovered that a plasticizer which includes a mono-olefin polymer such as what is commercially available under the trade designation Indopol H-100, and which is manufactured by Amoco, is particularly useful in the present invention. As will be appreciated, plasticizers have typically been employed to lower the viscosity of the overall adhesive composition without substantially decreasing the adhesive strength and/or the service temperature of the adhesive. As - noted above, the present adhesive composition has a viscosity of 1kg/ms (1,000 cP) to 50kg/ms (50,000 cP) at 162.78°C (325°F), and a melting point of 76.67°C (170°F) to 93.33°C (200°F). In view of the unexpectedly favorable viscosities, the adhesive composition of the present invention has improved spraying characteristics when employed with conventional manufacturing equipment.

As earlier discussed, the hot melt adhesive composition of the present invention includes 0.1% to 3%, by weight, of an antioxidant. As a general matter it is understood that antioxidants and stabilizers are important to protect the otherwise vulnerable copolymer and thereby the adhesive composition from the deleterious effects of thermal and oxidative degradation which is frequently experienced during-the-manufacture and application of adhesive compounds as well as in the ordinary use of the final product. It should be understood that this degradation usually manifests itself by the deterioration of the adhesive composition in appearance, physical properties and performance. Among the most useful stabilizers are high molecular weight hindered phenols, and multifunctional phenols, such as sulfur, and phosphorous-contain phenols. In this regard, hindered phenols are well known to those skilled in the art, and may be characterized as phenolic compounds which also contain sterically bulky radicals in close proximity to the phenolic hydroxyl group thereof. In particular, tertiary butyl groups generally are substituted onto the benzene ring in at least one of the ortho positions relative to the phenolic hydroxyl groups. The presence of the sterically bulky substituted radicals in the vicinity of the hydroxyl group is believed to retard its stretching frequency and correspondingly its reactivity. This steric hindrance is believed to provide the phenolic compounds with its stabilizing properties.

A suitable antioxidant for use with the present invention is commercially available from CIBA-GEIGY Company under the tradename Irganox 1010.

The performance of these stabilizers are well known in the art and may be further enhanced by utilizing in conjunction therewith, synergists such as for example, thiodipropionate esters and phosphites; and chelating agents and metal deactivators, such as, for example, ethylenediaminetetraacetic acid, salts thereof and disalicylalpropylenediimine.

The hot melt adhesive composition of the present invention may be formulated using any of the techniques known in the art. A representative example of the prior art procedure involves placing all of the plasticizer and stabilizer in a jacketed mixing kettle, and preferably in a jacketed heavy duty mixer of the Baker-Perkins or Day type and which is equipped with rotors and thereafter raising the temperature of this mixture to a range of 121.11°C (250°) to 176.67°C (350°F). It should be understood that the precise temperature to be used in this step will depend upon the melting point of the particular ingredients.

When the initial mixture, noted above, has been heated, the mixture is blanketed in carbon dioxide at a slow flow rate, and the resin described above is slowly added. When the resin is melted, and the desired temperature is reached, the copolymer is added to the mixture. The resultant adhesive composition mixture is then agitated until the copolymer is completely dissolved. A vacuum is then applied to the mixture to remove any entrapped air.

The invention is further illustrated by way of the examples noted below. In this regard, an adhesive composition in accordance with the teachings of the present invention was made by the general procedure described above. This adhesive composition had the following constituent elements:
about 25%, by weight, of a butene-1-ethylene copolymer;
about 50%, by weight, of a tackifying resin;
about 25%, by weight, of a plasticizer; and
0.1% to 3%, by weight, of a hindered phenolic antioxidant-and-wherein the hot melted adhesive composition following application displayed an improved open time, and room temperature flow properties, and further had a viscosity of about 2kg/ms (2,000 cP) at 162.78°C (325°F), and a melting point of about 76.67°C (170°F).

More specifically, butene-1-ethylene copolymer was commercially secured from Shell Chemical Company under the tradename Duraflex 8910-PC; the tackifying resin was commercially secured from Exxon Chemical Company under the tradename Escorez 1310 LC; the plasticizer was commercially secured from Amoco Chemical Company under the trade designation Indopol H-100; and the antioxidant was commercially secured under the trade designation Irganox 1010 from the CIBA-GEIGY.

The resulting hot melt adhesive composition, upon testing, was found useful for a multibead or multiline construction of nonwoven garments. Further it was sprayed and extruded on various substrates and found to be generally acceptable for all intended purposes. The specific performance characteristics of this preferred formulation and the examples which follow are discussed in greater detail hereinafter.

A second example of the adhesive composition was formulated and had the following characteristics:
about 40%, by weight, of a butene-1-ethylene copolymer;
about 40%, by weight, of a tackifying resin;
about 20%, by weight, of a plasticizer, and
about 1%, by weight, of a hindered phenolic
antioxidant, and wherein the adhesive composition has a viscosity of about 4kg/ms (4000 cP) at a temperature of about 162.78°C (325°F) and a melting point of about 82.22°C (180°F).

A third example of the adhesive composition was formulated and had the following characteristics:
about 50%, by weight, of a butene-1-ethylene copolymer;
about 30%, by weight, of a tackifying resin;
about 20%, by weight, of a plasticizer; and
about 1%, by weight, of a hindered phenolic
   antioxidant, and wherein the adhesive composition has a viscosity of about 5.5kg/ms (5500 cP) at a temperature of about 162.78°C (325°F) and a melting point of about 86.67°C (188°F).

A fourth example of the adhesive composition was formulated and had the following characteristics:
about 25%, by weight, of a butene-1-ethylene copolymer;
about 65%, by weight, of a tackyifying resin;
about 10%, by weight, of a plasticizer; and
about 1%, by weight, of a hindered phenolic
antioxidant, and wherein the adhesive composition has a viscosity of about 1.5kg/ms (1500 cP) at 162.78°C (325°F) and a melting point of about 78.33°C (173°F).

In each of the examples, noted above, it was found that adhesives formulated in accordance with these examples were useful for constructing nonwoven, disposable soft goods.

As noted earlier, traditional hot melt adhesives which have been formulated using SIS, SBS, SEBS and APAO have a propensity when exposed to water for prolonged periods of time, to lose their bond strengths, with the result that laminations prepared with such adhesives will fail when exposed for prolonged periods of time to water.

As should be understood, such delaminations, of a nonwoven garment, such as a diaper may cause the garment's core integrity to fail with resulting undesirable effects such as leaking or poor fit.

In order to demonstrate the novel and unexpected results achieved by the present invention, the inventors compared and contrasted the adhesive compositions of the present invention with the prior art adhesive compositions which have been commercially available for some time and which further utilize the polymers, such as SIS, SBS, SEBS, and APAO, as noted above. For example, the prior art adhesive compositions were applied in an amount equal to about approximately 4.65 g/m² (three milligrams per square inch) and at a temperature of 148.89°C (300°F), and further with an open time of about 0.5 seconds to form a tissue laminate. It was discovered that the present adhesive, when measured by a dry Instron peel strength evaluation, under similar coating conditions, produced a bond strength of approximately 100 grams, this bond strength being comparable to more traditional adhesive compositions. However, when the same adhesive composition was compared to the more traditional adhesives following a one hour soak in tap water, it was discovered that the traditional adhesives, as noted above, produced bond strengths in the range of 5 to 25 grams. In contrast, adhesives manufactured in accordance with the teaching of the present invention produced bond strengths in excess of 50 grams thereby making them a very attractive adhesive for use in constructing a nonwoven garment, and more specifically a diaper which may be exposed to water for prolonged periods of time.

The present composition was further tested by means of applying it to a nonwoven, and tissue substrate to form a laminate. The adhesive was applied in an amount equal to about 3.101 g/m² (2 milligrams per square inch) and at a temperature of about 148.89°C (300°F) and further with an open time of about 1.0 second. Following formation of the laminate, it was submerged in water for approximately one hour. Following submersion, the peel strength of the adhesive was tested in a manner similar to that which was discussed above. The test results demonstrated that the lamination had an average peel strength of about 50 grams following exposure to water for one hour. Traditional adhesive compositions displayed greatly reduced bond strengths along the ranges noted above. What was surprising, however, was the percentage of bond strength retained. For example, a standard adhesive such as H2120-01 and which may be secured from Findley Adhesives, had a bond strength following a soak of one hour of about 5.7 grams which represents about 2% of its dry bond strength. In contrast, the adhesive of the present invention, following a one hour soak retained a bond strength of about 56.6 grams, which represents approximately 36% of its dry bond strength.

When tested relative to multibead construction, and wherein polyethylene, and polypropylene are bound together to form a lamination, the present adhesive composition when applied to the selected substrates, as discussed above, in an amount equal to about 2.3256 g/m² (1.5 milligrams per square inch) of adhesive at 148.89°C (300°F) and at a 0.5 second open time produced a bond equal to about 855 grams. In contrast, when compared to prior art adhesive compositions, the average peel strength under the same coating conditions resulted in bond strengths of about 661-grams. When further compared against traditional adhesive compositions which are used to form laminations of polyethylene, and polypropylene and wherein the adhesive composition of the present invention is applied to the selected substrates in an amount equal to about 4.651 g/m² (3 milligrams per square inch) and at a temperature of 148.89°C (300°F), the present formulation produced bond strengths, as reflected by an average peel strength as measured by an Instron tensile tester, which are comparable to that produced by the conventional hot melt adhesives. Still further, when laminations were formed under the same conditions and which included a polyethylene substrate which is bound to a nonwoven, the average peel strength of the present adhesive was significantly improved and quite unexpected relative to that produced by a conventional hot melt adhesive composition. For example, under the conditions noted above, the average peel strength for a lamination which is composed of a polyethylene and nonwoven substrate, and wherein the adhesive composition of the present invention was applied in an amount equal to about 4.65 g/m² (3 milligrams per square inch), and at a temperature of about 148.89°C (330°F), was about 339 grams, as compared to traditional hot melt adhesive compositions which may be commercially secured from Findley Adhesive Inc. under the trade designation H2275-02 and which produced an average peel strength of about 208 grams.

As noted earlier, the adhesive composition of the present invention is substantially nonblocking under normal storage conditions. For example, the inventors prepared a lamination of polyethylene which was combined with a nonwoven to form a laminate. The adhesive of the present invention was applied to form the laminate in an amount equal to about 2.3256 g/m² (1.5 milligrams per square inch), and at a temperature of about 148.89°C (300°F). The adhesive was applied with about a 0.5 second open time. Further, a laminate was prepared under identical coating conditions by using a traditional hot melt adhesive composition such as what is commercially available from Findley Adhesives Inc. of Wauwatosa, Wisconsin and which can be purchased under the trade designation H2275-02. When identical blocking samples were prepared and were aged in an oven for 48 hours and at a temperature of - 60°C (140°F), the traditional hot melt adhesive, such as the formulation H2275-02, displayed an average peel strength of approximately 35 grams. In comparison, the adhesive composition of the present invention displayed an average peel strength of about 8.5 grams. These results were surprising in view of the fact that the present adhesive blocking values were significantly less than the state-of-the-art adhesive which is considered to be an excellent non-blocking adhesive for nonwoven garment assembly.

These results are significant in view of the conditions under which most nonwoven garments are employed. It is important, to understand that it is very beneficial that an adhesive composition flow for a time thereby allowing it to penetrate the nonwoven fibers thus establishing a mechanical bond with same. Once the flowing has occurred, however, it is important that the hot melt adhesive set up and be relatively hard and nontacky (non-blocking). This, of course, decreases the potential for blocking (sticking) to an adjoining substrate or surface such as may be the case when diapers are packed in a box and shipped at elevated temperatures; or worse yet, the possibility that the adhesive will, under some conditions, such as elevated temperature, adhere to the skin of a young infant, or during storage, flow completely out of the bond interface. As would be expected, an adhesive which would remain tacky under these circumstances could make an associated nonwoven article extremely uncomfortable to wear, as might be the case when such adhesives are utilized in garments such as incontinence garments, and feminine care articles or the like, which may be placed in an orientation where it is exposed to body hair.

In all the tests noted above, the peel strengths were measured at a rate of 0.005 m/s (12 inches per minute). Further, five samples were tested in each instance. Additionally, the blocking test was employed to simulate compact packaging. More specifically, the laminations employed in the blocking test were placed on top of nonwoven garments such as a diaper or the like with the nonwoven portion of the laminate placed in contact with the nonwoven substrate of the diaper. Samples were then compressed with a weight of 200 grams per square-centimeter for a period of 48 hours, and at a temperature of 60°C (140°F). The samples were then allowed to cool to room temperature. The samples were then tested for their peel strength in an Instron tensile tester at a rate of 0.005 m/s (12 inches per minute).

A review of the information above will reveal that the adhesives of the present invention give similar peel strengths as compared with more traditional hot melt adhesives such as Findley Adhesives H2275-02, and further show improved bond strengths when exposed to water. Further, the present adhesive composition appears to exhibit no noteworthy blocking characteristics, thereby suggesting that the adhesive will be very useful for assembling nonwoven goods which will be packaged in a compact fashion.

In addition to the foregoing, the adhesive composition of the present invention has a low viscosity, and melting point, which makes this a very desirable adhesive for use with the more traditional application methods.

Therefore, it will be seen that the hot melt adhesive of the present invention provides a fully dependable and practical means for adhesively assembling a disposable soft good such as a disposable diaper or feminine napkin, and which further avoids the detriments associated with the prior art practices which includes, among others, employing several different adhesive compositions for assembling a disposable soft good. In addition to the foregoing, the improved hot melt adhesive of the present invention shows surprising and unusually desirable manufacturing viscosities when compared with the prior art, and further has peel strengths, following exposure to water which are greatly improved in relative comparison to the

prior art.

## Claims

1. A hot melt adhesive composition having improved wet strength characteristics comprising a formulation having the following ingredients:
10% to 60% by weight of a butene-1-ethylene copolymer;
20% to 80% by weight of a tackifying resin;
5% to 30% by weight of a plasticizer with the trade designation Indopol H-100 which is a polybutene copolymer of isobutylene and butene having a number average molecular weight of about 920 as determined by vapor phase osmometer and a viscosity of 1.96 x 10⁻⁴ - 2.33 x 10⁻⁴ m²/s (196-233 cSt) at 99°C (210°F); and
0.1 % to 3% by weight of an antioxidant, wherein the ingredients total 100%, by weight, based on the weight of the entire adhesive composition,
wherein the hot melt adhesive composition has a viscosity of 1 to 50kg/ms (1000 to 50000 cP) at 162.78°C (325°F) and a melting point of 76.67°C (170°F) to 93.33°C (200°F).

2. A hot melt adhesive composition as claimed in Claim 1,
wherein the tackifying resin is at least partially compatible with the butene-1-ethylene copolymer and the antioxidant is a hindered phenolic antioxidant.

## Patentansprüche

1. Heißkleberzusammensetzung mit verbesserten Nassfestigkeitseigenschaften, die eine Formulierung mit den folgenden Inhaltsstoffen umfasst:
10 bis 60 Gew.-% eines Buten-1-Ethylen-Copolymers;
20 bis 80 Gew.-% eines klebrigmachenden Harzes;
5 bis 30 Gew.-% eines Weichmachers mit der Markenbezeichnung Indopol H-100, das ein Polybuten-Copolymer von Isobutylen und Buten ist, das eine wie durch ein Dampfphasenosmometer bestimmte durchschnittliche Molekulargewichtszahl von ca. 920 und eine Viskosität von 1,96 x 10⁻⁴ - 2,33 x 10⁻⁴ m²/s (196 - 233 cSt) bei 99°C (210°F) hat; und
0,1 bis 3 Gew.-% eines Antioxidans, wobei sich die Inhaltsstoffe insgesamt auf 100 Gew.-% basierend auf dem Gewicht der gesamten Kleberzusammensetzung belaufen,
wobei die Heißkleberzusammensetzung eine Viskosität von 1 bis 50 kg/ms (1000 bis 50000 cP) bei 162,78°C (325°F) und einen Schmelzpunkt von 76,67°C (170°F) bis 93,33°C (200°F) hat.

2. Heißkleberzusammensetzung nach Anspruch 1, wobei das klebrigmachende Harz zumindest teilweise mit dem Buten-1-Ethylen-Copolymer kompatibel und das Antioxidans ein gehindertes Phenol-Antioxidans ist.

## Revendications

1. Composition adhésive thermofusible ayant des caractéristiques de résistance à l'état humide améliorées comportant une formulation ayant les ingrédients suivants :
10 % à 60 % en poids d'un copolymère de butène-1-éthylène,
20 % à 80 % en poids d'une résine collante,
5 % à 30 % en poids d'un agent plastifiant ayant la désignation commerciale Indopol H-100 qui est un copolymère de polybutène d'isobutylène et de butène ayant un poids moléculaire moyen en nombre d'environ 920 comme déterminé par osmomètre en phase vapeur et une viscosité de 1,96 × 10⁻⁴ - 2,33 × 10⁻⁴ m²/s (196-233 cSt) à 99 °C (210 °F), et
0,1 % à 3 % en poids d'un antioxydant, où les ingrédients sont au total de 100 %, en poids, sur la base du poids de la composition adhésive entière,
où la composition adhésive thermofusible a une viscosité de 1 à 50 kg/ms (1 000 à 50 000 cP) à 162,78 °C (325 °F) et un point de fusion de 76,67 °C (170 °F) à 93,33 °C (200 °F).

2. Composition adhésive thermofusible selon la revendication 1, dans laquelle la résine collante est au moins partiellement compatible avec le copolymère de butène-1-éthylène et l'antioxydant est un antioxydant phénolique encombré.
